Europäisches Patentamt

European Patent Office

Office européen des brevets

(19)

(11) Veröffentlichungsnummer : **0 099 004**
**B1**

(12)     EUROPÄISCHE PATENTSCHRIFT

(45) Veröffentlichungstag der Patentschrift :
28.05.86

(51) Int. Cl.⁴ : **B 26 F   1/44**, B 23 P 15/40

(21) Anmeldenummer : **83106108.0**

(22) Anmeldetag : **22.06.83**

(54) **Stanzmesser, insbesondere für den Formschnitt und Verfahren zu dessen Herstellung.**

(30) Priorität : **02.07.82 CH 4066/82**

(43) Veröffentlichungstag der Anmeldung :
**25.01.84 Patentblatt 84/04**

(45) Bekanntmachung des Hinweises auf die Patenterteilung : **28.05.86 Patentblatt 86/22**

(84) Benannte Vertragsstaaten :
**AT BE CH DE FR GB IT LI LU NL SE**

(56) Entgegenhaltungen :
**DE-A- 1 761 302**
**DE-A- 1 761 372**
**DE-A- 2 716 893**
**DE-A- 2 740 981**
**DE-A- 2 921 695**
**FR-A- 1 570 756**
**FR-A- 2 349 396**
**PATENTS ABSTRACTS OF JAPAN, Band 5, Nr. 155**
**(M-90) (827), 30. September 1981, Seite 12 M 90**
**PATENTS ABSTRACTS OF JAPAN, Band 5, Nr. 101**
**(M-76) (773), 30. Juni 1981, Seite 103 M 76**

(73) Patentinhaber : **Stanzmesserfabrik Küsnacht AG**
**Florastrasse 3**
**CH-8700 Küsnacht (CH)**

(72) Erfinder : **Lattmann, Jürg**
**Weinmanngasse 23**
**CH-8700 Küsnacht (CH)**

(74) Vertreter : **Blum, Rudolf Emil Ernst et al**
*c/o E. Blum & Co Patentanwälte Vorderberg 11*
**CH-8044 Zürich (CH)**

## Beschreibung

Die Erfindung betrifft ein Stanzmesser zum Ausstanzen von Formstücken entlang einer geschlossenen Umfangsform aus gestapeltem, blattförmigem Material, mit einer keilförmigen Schneide, die aus einem hinteren Basisteil und einem daran angebrachten, vorderen Schneidenteil zusammengesetzt ist, wobei die Ebene des vorderen Schneidenteils als Verbindungsebene zum Basisteil rechtwinkelig zur Schneidrichtung verläuft sowie ein Verfahren zu dessen Herstellung. Stanzmesser dieser Art werden verwendet zum Ausstanzen von Teilen beliebiger Form aus Blattstapeln verschiedener Materialien, wie Papier, Textilien, Kunststoffen, Gummi, Leder sowie Nichteisenmetallen, und sind etwa der Veröffentlichung GB-A-776 369 oder GB-A-759 528 zu entnehmen.

Bei Stanzmessern der genannten Art ist der hintere Basisteil lediglich als Halterung für den vorderen Schneidenteil ausgebildet und übt selbst keine Schneidfunktion aus. Die Befestigung zwischen dem hinteren Basisteil aus Kunstharz und dem Schneidenteil aus einer Stahlklinge erfolgt mittels Bolzen, die einer höheren Stanzbelastung auf die Dauer nicht standhalten, und erlaubt keinen Einsatz in modernen Stanzmaschinen. Für Stanzmesser mit geschlossener Umfangsform wurde dieser Entwicklungsweg deshalb schon vor langem nicht mehr weiterverfolgt. Vielmehr wurden solche Stanzmesser integral aus härtbarem Stahl geschmiedet und jeweils im Schneidenbereich bei der Herstellung einer Härtung unterzogen. In Weiterentwicklung davon wurde ein Stanzmesser auf den Markt gebracht, welches ganz aus Hartmetall besteht. Dieses weist zwar eine stark verbesserte Schneidleistung auf, ist jedoch hinsichtlich Materialaufwand und den Bearbeitungsvorgängen bei der Herstellung sehr aufwendig. Den bekannten Stanzmessern der genannten Art ist gemeinsam, dass sie jeweils aus einem Stück gearbeitet sind, was darauf zurück geführt wird, dass die Schneide relativ hoch und dünn ausgebildet ist, eine glatte Innen- und Aussenfläche aufweisen muss sowie hohen Beanspruchungen ausgesetzt ist. Zudem müssen beliebige Umfangsformen erzielbar sein. Diese Forderungen liessen sich mit Stanzmessern, die aus einem Stück gebildet sind, bisher am einfachsten erfüllen, waren aber mit einer relativ beschränkten Schneidleistung oder aber mit hohem Herstellungsaufwand verbunden.

Es wurden anderseits auch in neuerer Zeit Versuche angestellt, mehrteilige Stanz- bzw. Schneidmesser zu schaffen. Bei einem solchen Stanzmesser gemäss DE-A-2 740 981 ist die Schneide aus zwei Stahlbändern zusammengesetzt, welche je auf die gewünschte Form zugebogen und hernach zusammengeschweisst werden. Der Schneidenteil aus hartem Stahl wird dabei auf der Innenseite des Tragteils angebracht. Damit soll eine spanabhebende Bearbeitung und eine Wärmebehandlung bei der Herstellung vermieden werden. Abgesehen davon, dass die Schneidleistung dieses Stanzmessers nicht grösser ist als bei herkömmlichen Stahlmessern mit gehärteter Schneide, weist es im Befestigungsbereich Vorsprünge auf, die es zum Stanzen höherer Materialstapel ungeeignet machen. In der DE-A-2 921 695 ist ein Maschinenmesser gezeigt, bei dem die Schneide eine in eine Nut eines Trägers eingelegte Hartmetall-Leiste besitzt. Solche Messer können nur gerade ausgebildet sein und sind nicht in beliebigen Umfangsformen herstellbar. Sie lassen sich deshalb grundsätzlich nicht für den Formschnitt verwenden.

Ausgehend von einem Stanzmesser der gattungsgemässen Art (GB-A-776 369 oder GB-A-759 528) stellt sich damit die Aufgabe, dieses so weiterzubilden, dass es einerseits grosse Stanzkräfte aufzunehmen vermag und anderseits auch höchste Verschliessfestigkeit besitzt, so dass ohne Nachschärfung grosse Auflagen auf modernen Stanzautomaten erzielbar sind.

Dies wird erfindungsgemäss dadurch erzielt, dass das vordere Schneidenteil aus einer ebenen Sinter-Hartmetall-Lage mit ausgeschnittenen inneren und äusseren Umfangsflächen und das hintere Basisteil aus Stahl besteht und diese Teile über ihre gesamte, ebene Berührungsfläche mittels Klebstoff oder Lot miteinander verbunden sind, um so eine aus den genannten zwei Teilen aufgebaute, einstückige Klinge zu bilden, deren beide Teile zur Schnittgeometrie beitragen, indem die Eindringtiefe der Klinge in den Materialstapel über die Berührungsfläche hinaus reicht.

Das Verfahren zu dessen Herstellung wird erfindungsgemäss so ausgeführt, dass an der ebenen Vorderfläche des vollen Basisteils mindestens im Bereich der zu bildenden Schneide in Plattenform eine Lage aus Sinter-Hartmetall fest aufgebracht wird, wobei mindestens der Innenteil mittels Funkenerosion ausgeschnitten wird.

Vorzugsweise wird für die Funkenerosion ein Drahterodierverfahren eingesetzt, so dass eine sich konisch vom Schneidenteil gegen den Basisteil öffnende oder verengende Innenfläche gebildet wird.

Das erfindungsgemässe Stanzmesser weist gegenüber den bekannten Stanzmessern den Vorteil auf, dass mit relativ geringen Materialkosten ein Messer mit hoher Schneidleistung einfach herstellbar ist. Sowohl die Materialkosten als auch der Bearbeitungsaufwand sind gegenüber den ganz aus Hartmetall bestehenden Stanzmessern wesentlich gesenkt, unter Beibehaltung von deren vorteilhaften Eigenschaften hinsichtlich Schneidleistung. Ferner können die oftmals notwendigen seitlichen Messeransätze zum Zerteilen des Randabfalls leicht an der gewünschten Stelle angeordnet werden, indem in den Basisteil aus Stahl auf einfache Weise Gewindelöcher zu deren Befestigung gebohrt werden können, was beim ganz aus Hartmetall bestehenden Stanzmesser nicht der Fall ist. Ein weiterer Vorteil besteht darin, dass bei beschädigtem vorderen Schneidenteil dieser relativ leicht ausgewechselt werden kann unter Beibehaltung des Basisteils.

Schliesslich können, vorzugsweise durch das Zusammensetzen der Hartmetall-Lage aus mehreren Einzelplatten,. auf einfache Weise Stanzmesser mit grossen Ausmassen bei beschränktem Kostenaufwand hergestellt werden.

Nachfolgend wird anhand der Zeichnungen ein Ausführungsbeispiel der Erfindung näher erläutert. Es zeigen :

Figur 1 ein Stanzmesser zum Ausstanzen von Briefumschlagteilen in perspektivischer Darstellung ;

Figur 2a bis d aufeinanderfolgende Phasen bei der Herstellung in Schnittdarstellung entsprechend der Linie II-II in Fig. 1 ;

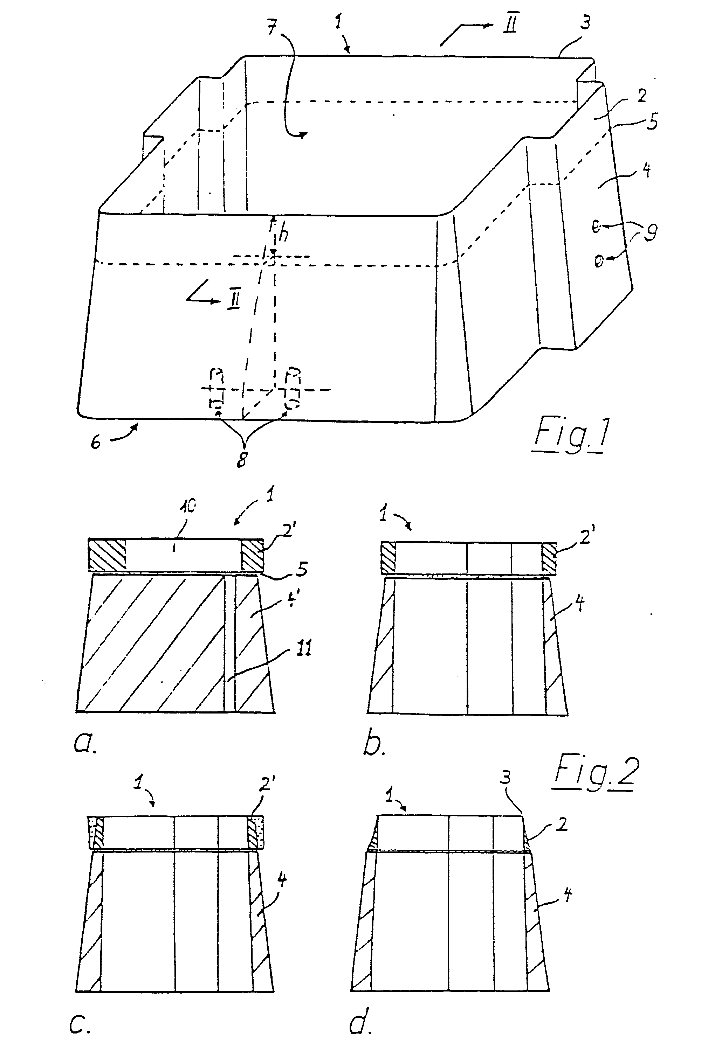

Zunächst wird anhand der Fig. 1 die Ausbildung einer Ausführungsform des Stanzmessers 1 am Beispiel eines Briefumschlagstanzmessers dargestellt. Es sei jedoch betont, dass auch andere Umfangsformen herstellbar sind. Das Stanzmesser (1) weist einen vorderen Schneidenteil 2 auf, an welchem sich die Schneidkante 3 befindet, welche in das auszustanzende Material, z. B. einen Papierblattstapel eindringt. Dieser Schneidenteil 2 ist den grössten Beanspruchungen ausgesetzt und insbesondere die Schneidkante 3, die etwa einen Keilwinkel von 10° aufweist, wird mit dem Gebrauch zunehmend stumpf, so dass sie periodisch nachgeschliffen werden muss. Um den Zeitraum zwischen den einzelnen Nachschleifungen zu erhöhen, besteht der Schneidenteil 2 über eine Höhe h von mindestens 8 mm aus Sinterhartmetall. Die Höhe des Schneidenteils 2 kann bei Bedarf auch grösser sein, was ein häufiges Nachschleifen gestattet, jedoch auch die Herstellungskosten erhöht. Der Schneidenteil 2 ist auf einem Basisteil 4 angeordnet, der aus handelsüblichem Stahl besteht, welcher nicht härtbar zu sein braucht. Die Stossstelle 5 zwischen diesen Teilen wird durch eine ebene Fläche gebildet, die senkrecht zur Schneidrichtung ausgerichtet ist, so dass die Scherbeanspruchung an der Stossstelle relativ gering ist, was eine kleine Wandstärke an dieser Stelle zulässt. Der Schneidenteil 2 und der Basisteil 4 gehen an ihrer Stossstelle 5 stufenlos ineinander über. Dies ist notwendig, weil der Blattstapel höher als die Schneidenteilhöhe h sein kann und somit auch der Basisteil in den Stapel eindringt. Schneidenteil und Basisteil haben nach der Befestigungsseite 6 hin zunehmende Wandstärke, um die nötige Stabilität zu gewährleisten. Die Innenfläche (7) des Stanzmessers 1 läuft nach der Befestigungsseite hin konisch auseinander in einem Winkel von ca. 0,5°, so dass die gestanzten Teile durch dieses hindurch weggeführt werden können.

Für Anwendungen, bei welchen der Auswurf der gestanzten Teile nach der Schneidenseite hin erfolgt, wird das Stanzmesser mit nach dieser Seite sich öffnender, konischer Innenfläche versehen.

Die Befestigung des Stanzmessers 1 erfolgt an der Befestigungsseite 6 entweder durch Einklemmen an hierfür ausgebildeten Schultern (nicht gezeigt) oder durch Festschrauben mittels Gewindebohrungen 8. Diese können auf einfache Weise in den Basisteil 4 eingeformt werden. Dasselbe gilt für Befestigungslöcher 9 für seitliche Messeransätze zum Zerteilen des Randabfalls (nicht gezeigt), welche im Basisteil 4 an der gewünschten Stelle angeordnet sein können. Die genannten Bohrungen sowie allfällige Kennzeichnungen des Stanzmessers werden regelmässig im Basisteil 4 angeordnet, da das Hartmetall hierfür aufwendiger Bearbeitung bedürfte. Weil dieses Material den kostspieligsten Teil des Stanzmessers 1 darstellt, wird der Schneidenteil 2 nicht höher ausgebildet als dies für eine gewünschte Anzahl Nachschleifungen nötig ist. Es sollte jedoch eine Höhe von ca. 8 mm aus Stabilitätsgründen möglichst nicht unterschritten werden, so dass die Wandstärke bzw. die Breite der Verbindungsfläche an der Stossstelle zum Basisteil in der Grössenordnung von 2 mm bleibt.

Zur Herstellung des Stanzmessers 1 wird auf den vorgeformten, vollen Basisteil 4' eine Platte 2' aus gesintertem Metall aufgebracht (Fig. 2a). Dies erfolgt durch Löten oder das Verkleben mit einem Zweikomponentenkleber herkömmlicher Art (Araldit). Die Hartmetallplatte weist, insbesondere im Falle des Auflötens, eine zentrale Ausnehmung 10 auf, die jedoch in ihrer Ausdehnung den zu bildenden Schneidenumfang nicht erreicht. Diese Ausnehmung 10 hat beim Löten die Funktion, die durch unterschiedliche Wärmeausdehnung auftretende Spannung auszugleichen, senkt überdies die Materialkosten und erleichtert das Einsetzen der Drahtelektrode für die Funkenerosion, wie noch erläutert wird. Die Hartmetallplatte 2' deckt mit ihrem Umfang mindestens denjenigen des vorgeformten Basisteils 4' an der entsprechenden Fläche.

Bei Stanzmessern grossen Ausmasses wird die Hartmetall-Lage vorzugsweise aus aneinander anliegenden Einzelplättchen gebildet, welche entlang dem zu erzielenden Schneidenumfang angeordnet werden.

Im vorgeformten Basisteil 4' ist ferner eine Bohrung 11 für das Einführen der genannten Drahtelektrode angeordnet. Um in einem nächsten Arbeitsgang (Fig. 2b) den Innenteil des Stanzmessers 1 auszuschneiden, wird der in beschriebener Art gebildete Block in eine Drahterosionsanlage eingespannt und der Draht durch die Bohrung 11 bzw. die Ausnehmung 10 hindurch eingeführt. Anschliessend wird in an sich bekannter Weise die Innenform nach Programm ausgeschnitten. Da der grösste Teil des zu schneidenden Materials aus Stahl und nur ein kleinerer Teil aus Hartmetall besteht, kann dieser Bearbeitungsvorgang verhältnismässig rasch erfolgen. Die Drahterosionsanlage ist so eingestellt, dass der erwähnte Oeffnungswinkel von ca. 0,5° nach der Rückseite hin entsteht. In einem anschliessenden Arbeitsgang (Fig. 2c) wird der Ueberstand der Hartmetallplatte 2' über den Aussenumfang des Basisteils 4 mittels einer Siliciumkarbid- oder Karborundumschleifscheibe abgeschliffen. Danach (Fig. 2d) erfolgt das Anschärfen der Schneide 3 durch Schleifen mittels einer Diamantscheibe. Hierzu können mehrere Schleifumgänge auf unterschiedlicher Höhe, jedoch immer im Hartmetall, vorgenommen werden. Schliesslich erfolgt das Ausgleichen des Ueberganges zwischen Schneidenteil 2 und Basisteil 4 mittels einer Siliziumkarbid- oder Karborundumschleifscheibe (nicht dargestellt).

Falls der Schneidenteil 2 beim Gebrauch oder auf andere Weise derart beschädigt wird, dass er unbrauchbar wird, kann er vom Basisteil abgelöst und gemäss Fig. 2a durch eine neue Hartmetallplatte 2' ersetzt werden. Der Herstellungsvorgang läuft anschliessend entsprechend ab, wobei beim Arbeitsgang nach Fig. 2b die Drahterosion nunmehr im Hartmetall nach dem ursprünglichen Programm erfolgt.

Im Vergleich zum bekannten, vollständig aus Hartmetall gefertigten Stanzmesser hat das erfindungsgemäss ausgebildete Messer wesentliche Vorteile. Insbesondere fällt die Materialersparnis ins Gewicht sowie die leichtere Bearbeitbarkeit des zusammengesetzten Stanzmessers. Da der Basisteil aus relativ billigem und einfach bearbeitbarem Stahl besteht, können Befestigungsmittel für das Stanzmesser sowie zusätzliche, seitliche Messeransätze leicht an diesem Teil angebracht werden, ohne dass der Hartmetall-Schneidenteil hierbei zusätzlich bearbeitet werden muss. Schliesslich kann der Schneidenteil bei Beschädigung unter Beibehaltung des Basisteils ausgetauscht werden. Mittels Drahterosion lässt sich das zusammengesetzte Stanzmesser mit konischer Innenform einfach herstellen.

Schliesslich sei auf die vorteilhafte Abwandlung im Bearbeitungsvorgang hingewiesen, welche darin besteht, dass der Basisteil nicht vorgeformt wird, sondern sowohl die Aussen- als auch die Innenfläche des Stanzmessers nach Aufbringen der Hartmetall-Lage mittels Drahterosion gebildet wird. Damit lässt sich der erläuterte Schleifvorgang wesentlich vereinfachen, indem die Schneidkante bereits durch das Erodierverfahren weitgehend erzielt werden kann.

## Patentansprüche

1. Stanzmesser (1) zum Ausstanzen von Formstücken entlang einer geschlossenen Umfangsform aus gestapeltem, blattförmigem Material, mit einer keilförmigen Schneide, die aus einem hinteren Basisteil (4) und einem daran angebrachten, vorderen Schneidenteil (2) zusammengesetzt ist, wobei die Ebene des vorderen Schneidenteils (2) als Verbindungsebene (5) zum Basisteil rechtwinkelig zur Schneidrichtung verläuft, dadurch gekennzeichnet, dass das vordere Schneidenteil (2) aus einer ebenen Sinter-Hartmetallage mit ausgeschnittenen inneren und äusseren Umfangsflächen und das hintere Basisteil (4) aus Stahl besteht und diese Teile über ihre gesamte, ebene Berührungsfläche mittels Klebstoff oder Lot miteinander verbunden sind, um so eine aus den genannten zwei Teilen aufgebaute, einstückige Klinge zu bilden, deren beide Teile zur Schnittgeometrie beitragen, indem die Eindringtiefe der Klinge in den Materialstapel über die Berührungsfläche hinaus reicht.

2. Stanzmesser nach Anspruch 1, mit mindestens einem seitlichen Messeransatz zum Zerteilen des Randabfalles, dadurch gekennzeichnet, dass der Messeransatz vorzugsweise mittels Schraubverbindung (9) am Basisteil (4) befestigt ist.

3. Stanzmesser nach einem der vorangehenden Ansprüche, dadurch gekennzeichnet, dass dessen Innenfläche (7) konisch vom Schneidenteil (2) gegen den Basisteil (4) verläuft.

4. Verfahren zur Herstellung des Stanzmessers (1) nach Anspruch 1 mit geschlossener Schneidenform, dadurch gekennzeichnet, dass an der ebenen Vorderfläche (5) des vollen Basisteils (4) mindestens im Bereich der zu bildenden Schneide (3) in Plattenform eine Lage aus Sinter-Hartmetall (2') fest aufgebracht wird, wobei mindestens der Innenteil des Stanzmessers mittels Funkenerosion ausgeschnitten wird.

5. Verfahren nach Anspruch 4, dadurch gekennzeichnet, dass als Sinter-Hartmetall-Lage eine Hartmetallplatte (2') mit zentraler Ausnehmung (10) aufgebracht wird, wobei die Ausnehmung innerhalb des zu bildenden Schneidenumfangs angeordnet ist, und dass der volle Basisteil (4) im Bereich dieser Ausnehmung mit einer Bohrung (11) zum Einführen einer Drahtelektrode versehen ist.

6. Verfahren nach einem der Ansprüche 4 oder 5, dadurch gekennzeichnet, dass die Schneidkante (3) durch Anschleifen der Schneide an der Aussenseite gebildet wird, wobei der Schleifvorgang in den Schritten : Grobschleifen des Stanzmesservorderteils mittels einer Siliziumkarbid- oder Karborundumscheibe, nachfolgendes Feinschleifen des Hartmetall-Schneidenteils (2) mittels einer Diamantscheibe und schliesslich Schleifen der Uebergangszone zwischen dem Schneidenteil (2) und dem Basisteil (4) mittels einer Siliziumcarbid- oder Karborundumscheibe, erfolgt.

7. Verfahren nach einem der vorangehenden Ansprüche 4 bis 6, dadurch gekennzeichnet, dass die Funkenerosion mittels eines Drahterodierverfahrens erfolgt, derart, dass eine sich konisch vom Schneidenteil (2) gegen den Basisteil (4) öffnende oder verengende Innenfläche (7) gebildet wird.

## Claims

1. Cutting die (1) for cutting stapled sheet material into pieces of closed circumferential shape, having a wedge-shaped blade composed of a rear base suppor section (4) and of a front cutting section (2) connected to said base support section, wherein the plane of the front cutting section (2) forms the connection plane (5) to the base support section (4) and extends at a right angle to the cutting direction, characterized in that the front cutting section (2) is made of a planar layer of cemented carbide material, its inner and outer circumferential faces being cut out of this layer and the base support section is made of steel, wherein said two sections are connected to each other along their whole plane contact face by means of adhesive or solder so as to form an integral blade composed of said two sections, each of these sections contributing to the cutting geometry, because the depth of penetration of the blade into the stapled sheet material exceeds the heigth of said contact face.

2. Cutting die of claim 1, having at least one auxiliary side knife for cutting residual sheet portions, characterized in that the side knife is fixed at the base support section (4), preferably by means of a screw connection (9).

3. Cutting die of one of the preceding claims characterized in that its inner face (7) is formed to conically widen from the front cutting section (2) towards the base support section (4).

4. Method for manufacturing the cutting die (1) of claim 1 having a blade of closed circumferential shape characterized in that a layer of cemented carbide metal (2') in the form of one or several plates is fixed at the plane front surface (5) of a block forming the base support section (4) at least in the zone of the blade (3) to be formed, wherein at least the inner portion of the cutting blade is cut out by means of spark erosion.

5. Method of claim 4, characterized in that the layer of cemented carbide metal is formed by a cemented carbide plate (2') having a central opening within the circumference of the cutting blade to be formed, and in that said block (4) is provided with a vertical bore ending in said central opening for insertion of an electrode wire.

6. Method of one of the claims 4 or 5, characterized in that the cutting edge (3) is formed by grinding the outer face of the cutting blade, wherein the grinding process is performed in the steps of coarse grinding of the front portion of the blade by means of a carborundum grinding wheel, followed by precision grinding of the cemented carbide cutting section (2) by means of a diamond grinding wheel and in a final step of grinding the transition region between said cutting section (2) and said base support section (4) by means of a carborundum grinding wheel.

7. Method of one of the preceding claims 4 to 6, characterized in that the spark erosion is made by means of a wire spark erosion process so that an inner face (7) is formed which conically widens or narrows from the cutting section (2) towards the base support section (7).

**Revendications**

1. Matrice de découpe (1) pour la découpe de pièces de forme suivant la forme d'un contour fermé, à partir d'un matériau en forme de feuille, stratifié, avec un tranchant en forme de coin qui est composé d'une partie de base postérieure (4) et d'une partie de tranchant antérieure (2) qui lui est adaptée, le plan de la partie de tranchant antérieure (2) s'étendant comme plan d'assemblage (5) vers la partie de base, perpendiculairement à la direction de la coupe, caractérisée en ce que la partie de tranchant antérieure (2) est constituée d'une couche plane de métal dur fritté, avec des surfaces périphériques intérieures et extérieures découpées, et en ce que la partie de base postérieure (4) est faite d'acier et en ce que ces parties sont reliées l'une à l'autre sur toute leur surface de contact plane au moyen d'adhésif ou de soudure pour former ainsi une lame d'une pièce, construite à partir des deux parties citées, dont les deux parties contribuent à la géométrie de la coupe, la profondeur de pénétration de la lame dans l'empilage de matière arrivant au-delà de la surface de contact.

2. Matrice de découpe suivant la revendication 1, avec au moins un jeu latéral de couteaux pour diviser la chute marginale, caractérisée en ce que le jeu de couteaux est fixé à la partie de base (4), de préférence au moyen d'un assemblage à vis (9).

3. Matrice de découpe suivant l'une des revendications précédentes, caractérisée en ce que sa surface intérieure s'étend à la façon d'un cône, de la partie de tranchant (2) à la partie de base (4).

4. Procédé pour la fabrication de la matrice de découpe (1) suivant la revendication 1, avec une forme de tranchant fermée, caractérisé en ce qu'à la surface antérieure plane (5) de la partie de base pleine (4), on a rapporté, au moins dans la région du tranchant (3) à former, une couche en forme de plaque (2') de métal dur fritté, la partie intérieure au moins de la matrice de découpe étant découpée par étincelage.

5. Procédé suivant la revendication 4, caractérisé en ce que comme couche de métal dur fritté, on rapporte une plaque de métal dur (2') avec un évidement central (10), l'évidement étant disposé à l'intérieur du contour de tranchant à former, et en ce que la partie de base pleine (4) est pourvue, dans la région de cet évidement, d'une forure (11) pour y introduire une électrode de fil.

6. Procédé suivant l'une des revendications 4 ou 5, caractérisé en ce que le bord tranchant (3) est formé par affûtage du tranchant du côté extérieur, le processus d'affûtage comprenant les étapes de meulage grossier de la partie antérieure de la matrice de découpe à l'aide d'une meule au carbure de silicium ou au carborundum ; ensuite de meulage fin de la partie de tranchant en métal dur (2) à l'aide d'une meule diamantée ; et enfin de meulage de la zone de transition entre la partie de tranchant (2) et la partie de base (4), au moyen d'une meule au carbure de silicium ou au carborundum.

7. Procédé suivant l'une des revendications précédentes 4 à 6, caractérisé en ce que l'étincelage se fait par un procédé d'étincelage par fil, de telle sorte que soit formée une surface intérieure (7) s'ouvrant ou se rétrécissant, s'étendant de façon conique de la partie de tranchant (2) à la partie de base (4).

*Fig.1*

*Fig.2*

a.

b.

c.

d.